(19) Europäisches Patentamt
European Patent Office
Office européen des brevets

(11) **EP 2 669 010 A1**

(12) **EUROPEAN PATENT APPLICATION**
published in accordance with Art. 153(4) EPC

(43) Date of publication:
04.12.2013 Bulletin 2013/49

(51) Int Cl.:
*B01J 31/32* [(2006.01)]  *B01J 27/232* [(2006.01)]
*B01J 35/10* [(2006.01)]  *B01J 37/04* [(2006.01)]
*C10G 2/00* [(2006.01)]

(21) Application number: 12739287.6

(22) Date of filing: 24.01.2012

(86) International application number:
PCT/JP2012/051403

(87) International publication number:
WO 2012/102256 (02.08.2012 Gazette 2012/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 24.01.2011   JP 2011011896
24.01.2011   JP 2011011897

(71) Applicant: Cosmo Oil Co., Ltd.
Tokyo 105-8528 (JP)

(72) Inventors:
• MIURA Yasutomo
  Satte-shi,
  Saitama 340-0193 (JP)
• NAKASHIZU Shigenori
  Hiki-gun,
  Saitama
  355-0227 (JP)

(74) Representative: Vossius & Partner
Siebertstrasse 4
81675 München (DE)

(54) **CATALYST FOR FISCHER-TROPSCH SYNTHESIS, AND PRODUCTION METHOD THEREFOR, AS WELL AS HYDROCARBON PRODUCTION METHOD USING FISCHER-TROPSCH SYNTHESIS CATALYST**

(57) The catalyst for FT synthesis comprises manganese carbonate containing from 10 to 25% by mass of silica in terms of an oxide on the basis of the mass of the catalyst, not more than 6% by mass of an organic binder on the basis of the mass of the catalyst, and from 0.5 to 5% by mass of ruthenium in terms of a metal on the basis of the mass of the catalyst, wherein the catalyst has a surface area of 100 to 210 m$^2$/g and a pore volume of 0.1 to 0.6 ml/g.

EP 2 669 010 A1

# EP 2 669 010 A1

**Description**

TECHNICAL FIELD

The present invention relates to a catalyst for Fischer-Tropsch synthesis, a production method therefor, and a method for producing hydrocarbons using the Fischer-Tropsch synthesis catalyst.

The present invention relates to a catalyst for Fischer-Tropsch synthesis for producing hydrocarbons from a mixed gas containing hydrogen and carbon monoxide as main components (hereinafter referred to as "syngas"), a production method for the catalyst, and a method for producing hydrocarbons using the catalyst produced using the catalyst production method. More specifically, the invention relates to a catalyst comprising a support containing manganese carbonate as a main component, wherein the support contains a metal having activity in the Fischer-Tropsch reaction (hereinafter referred to as "FT active mental") incorporated therein, a production method for this catalyst, and a method for producing hydrocarbons such as naphtha, kerosene, a diesel fuel and a wax by bringing a syngas into contact with the subject catalyst produced using the catalyst production method.

Priority is claimed on Japanese Patent Application No. 2011-11896, filed January 24, 2011, and Japanese Patent Application No. 2011-11897, filed January 24, 2011, the contents of which are incorporated herein by reference.

BACKGROUND ART

As methods for synthesizing hydrocarbons from a syngas, the Fischer-Tropsch reaction (hereinafter also abbreviated as "FT reaction"), a methanol synthesis reaction, and an oxygen-containing C2 (ethanol, acetaldehyde, etc.) synthesis reaction and the like are well known. It is also known that the FT reaction proceeds with a catalyst containing, as an active metal, an iron group element such as iron, cobalt or nickel, or a platinum group element such as ruthenium or the like; the methanol synthesis reaction proceeds with a copper based catalyst; and the oxygen-containing C2 synthesis reaction proceeds with a rhodium based catalyst (see, for example, Non-Patent Document 1).

Incidentally, in recent years, a diesel fuel having a low sulfur content has been desired from the viewpoint of air environmental conservation. Moreover, from the viewpoint that crude oil resources are limited and from the standpoint of energy security, it is desirable to develop alternative fuels to oil. As a technology responding to these desires, there is GTL (gas to liquids), which is a technology for synthesizing liquid fuels such as kerosene and diesel fuel and the like from a natural gas (main component: methane), the proven reserves of which are said to be comparable to crude oil in terms of energy. The natural gas does not contain a sulfur content, or even if it contains a sulfur content, the sulfur content is hydrogen sulfide ($H_2S$) or the like which is easily desulfurized, and therefore, the resulting liquid fuel such as kerosene or diesel fuel or the like has no substantial sulfur content and possesses an advantage that it can be utilized as a high-performance diesel fuel having a high cetane number. Thus, GTL has recently been attracting more and more attention.

As a part of the foregoing GTL, a method for synthesizing hydrocarbons from a syngas by the FT reaction (hereinafter referred to as "FT method") has been actively investigated. In this FT method, in order to increase the yield of hydrocarbons, it is considered effective to use an FT synthesis catalyst having excellent performance, which exhibits a superior hydrocarbon-producing ability, namely high activity, produces minimal formation of gaseous components, and for which the activity is stably exhibited over a long period of time.

Then, various catalysts for the FT synthesis have hitherto been proposed. For example, a catalyst in which an FT active metal species such as cobalt or iron is supported on a metal oxide support made of, for example, alumina, silica, silica-alumina, or titania or the like has been proposed (see, for example, Patent Documents 1 to 3). Moreover, as catalysts aiming at a high selectivity for olefins, there have been proposed ruthenium based catalysts such as a catalyst in which ruthenium is supported on a manganese oxide support, a catalyst in which a third component is further added to this ruthenium-supported catalyst, and the like (see, for example, Patent Documents 4 and 5).

Although these conventionally proposed catalysts exhibit reasonably superior selectivity for olefins and corresponding catalytic activity in the FT method using the catalyst, a further enhancement of the catalytic activity is desirable. In general, the higher the activity of the catalyst, the higher the productivity of a desired product per weight of the catalyst becomes. Thus, the weight of the catalyst used for obtaining a specified amount of the desired product may be reduced, and accordingly, downsizing of the reactor and the like can be achieved, meaning a reduction of catalyst expenses or equipment expenses can be expected.

For example, with respect to the catalyst for FT synthesis, it is desirable that the formation of gaseous components such methane and the like in the product is minimal, and that the yield of useful liquid hydrocarbons such as kerosene and diesel fuel is high. Accordingly, the inventors of the present invention have proposed a catalyst for FT synthesis that uses a manganese carbonate support, exhibits a high CO conversion, exhibits minimal formation of gaseous components, and can stably perform an FT synthesis reaction (see, for example, Patent Document 6). This catalyst has an extremely high level of activity, and is ideal for use in a fluidized bed, a suspended bed or a slurry bed or the like.

On the other hand, depending on the type of reactor, the physical properties required of the catalyst can often differ. For example, when a finely powdered catalyst prepared for a slurry bed reactor is used in fixed bed reactor, the development of differential pressure is a concern. For this reason, in a fixed bed reactor, it is desirable to use a molded catalyst which generates minimal differential pressure, but compared with a finely powdered catalyst, the particle shape of a molded catalyst is larger, and therefore the contact efficiency between the syngas and the catalyst tends to decrease, meaning preparing a molded catalyst of higher activity is very important.

In addition, a catalyst used in a fixed bed reactor requires different catalyst physical properties from a catalyst used in a slurry bed reactor, and must not only maintain its activity, but also requires the special catalyst strength necessary for a reaction in a fixed bed reactor.

BACKGROUND ART TECHNICAL DOCUMENTS

Patent Documents

Patent Document 1: U.S. Pat. No. 5,733,839
Patent Document 2: U.S. Pat. No. 5,545,674
Patent Document 3: European Patent No. 0167215
Patent Document 4: Japanese Examined Patent Application, Second Publication No. H3-70691
Patent Document 5: Japanese Examined Patent Application, Second Publication No. H3-70692
Patent Document 6: PCT International Pabulication No. WO 2009/157260
Patent Document 7: Japanese Unexamined Patent Application, First Publication No. 2010-5496

Non-Patent Document

Non-Patent Document 1: "C1 Chemistry", compiled by Catalysis Society of Japan, Kodansha Ltd., April 1, 1984, page 25

SUMMARY OF INVENTION

Problems to be Solved by the Invention

In light of the circumstances described above, an object of the present invention is to provide a molded catalyst for FT synthesis that exhibits a higher level of performance, and a production method for the catalyst.

Means for Solving the Problems

As a result of intensive research aimed at achieving the foregoing object, the inventors of the present invention discovered that by incorporating an FT active metal within a molded support prepared by incorporating a prescribed amount of an organic binder in manganese carbonate, and then regulating the specific surface area and pore volume of the catalyst within prescribed ranges, a catalyst for FT synthesis that is particularly suited to use in a fixed bed reactor could be obtained, and they were therefore able to complete the present invention.

Further, the inventors of the present invention also discovered that when impregnating and supporting ruthenium as an FT active metal on a molded support containing manganese carbonate as a main component, by using ruthenium nitrate as the ruthenium source, and then performing drying under prescribed drying conditions, a catalyst for FT synthesis having even better performance could be obtained.

Detailed mechanisms for the enhancement of the activity of the catalyst of the present invention and the reduction in the formation of gases have not yet been elucidated, but extensive and intensive investigations are currently being conducted, and it is thought that the manganese carbonate, which represents the main component of the support but is inactive in the FT reaction, may act in some form on the FT active metal species, thereby enhancing the activity as well as suppressing the formation of gases.

In other words, in order to achieve the foregoing object, the present invention provides a catalyst for FT synthesis having the following configuration, a production method for the catalyst, and a method for producing hydrocarbons using the catalyst produced using the catalyst production method.

(1) A catalyst for Fischer-Tropsch synthesis includes manganese carbonate, from 10 to 25% by mass of silica in terms of an oxide on the basis of the mass of the catalyst, not more than 6% by mass of an organic binder on the basis of the mass of the catalyst, and from 0.5 to 5% by mass of ruthenium in terms of a metal on the basis of the mass of the catalyst, wherein the catalyst has a surface area of 100 to 210 $m^2/g$ and a pore volume of 0.1 to 0.6 ml/g.

(2) The catalyst for Fischer-Tropsch synthesis as set forth above in (1), wherein the organic binder is a methyl cellulose.

(3) A production method for a catalyst for Fischer-Tropsch synthesis, the method comprising:

preparing a support by kneading a mixture formed by incorporating, in manganese carbonate, an amount of a silica sol sufficient to provide a silica content of 10 to 25% by mass in terms of an oxide on the basis of the mass of the catalyst, and not more than 6% by mass of an organic binder on the basis of the mass of the catalyst, and subsequently molding the obtained kneading mixture,

subsequently preparing a catalyst precursor by drying the support at not higher than 250°C, and incorporating, in the catalyst precursor, from 0.5 to 5% by mass of ruthenium in terms of a metal on the basis of the mass of the catalyst, and then performing drying at not higher than 250°C.

(4) The production method for a catalyst for Fischer-Tropsch synthesis as set forth above in (3), wherein following incorporating ruthenium in the support using ruthenium nitrate, drying is performed at 70 to 170°C.

(5) A method for producing hydrocarbons comprising synthesizing hydrocarbons from a gas containing hydrogen and carbon monoxide as main components, using the catalyst for Fischer-Tropsch synthesis as set forth above in (1) or (2).

(6) A method for producing hydrocarbons comprising synthesizing hydrocarbons from a gas containing hydrogen and carbon monoxide as main components, using a catalyst for Fischer-Tropsch synthesis produced using the production method for a catalyst for Fischer-Tropsch synthesis as set forth above in (3) or (4).

Advantageous effects of invention

The catalyst for FT synthesis of the present invention has a high CO conversion compared with conventional catalysts containing alumina or silica as the support, and can also reduce the proportion of gaseous components such as $CH_4$ that are formed. In particular, because the catalyst for FT synthesis of the present invention is produced by incorporating an FT active metal in a support prepared by incorporating a prescribed amount of an organic binder in manganese carbonate, and also has a prescribed surface area and pore volume, the catalyst exhibits both excellent FT synthesis activity, as well as the catalyst strength necessary for use in a fixed bed reaction.

By using the production method for a catalyst for FT synthesis according to the present invention, a catalyst for FT synthesis that exhibits both excellent FT synthesis activity, as well as the catalyst strength necessary for use in a fixed bed reaction can be produced.

Further, the catalyst for FT synthesis obtained using the production method for a catalyst for FT synthesis according to the present invention is an extremely superior catalyst, having a higher FT activity than conventional molded catalysts and a low $CH_4$ selectivity.

Furthermore, according to the present invention, a catalyst for FT synthesis having a high FT activity and high productivity of hydrocarbons is provided, and effects such as reduced catalyst costs and downsized reactors and the like are expected.

BEST MODE FOR CARRYING OUT THE INVENTION

The catalyst of the present invention, and embodiments from the preparation of the catalyst through to a method for producing hydrocarbons using the catalyst are described hereunder.

<Catalyst for FT Synthesis and Production Method therefor>

The catalyst for FT synthesis of the present embodiment (hereinafter also referred to as the "catalyst of the present embodiment") comprises a support containing manganese carbonate as a main component and also incorporating silica and an organic binder (hereinafter also referred to as the "manganese carbonate support"), and an FT active metal species is incorporated within the support.

Further, the catalyst of the present embodiment obtained by the production method for a catalyst for FT synthesis of the present embodiment (hereinafter also referred to as the "catalyst production method of the present embodiment,") is preferably a catalyst obtained by using ruthenium nitrate to incorporate ruthenium as the FT active metal species within the manganese carbonate support.

As the manganese carbonate which is a main component of the manganese carbonate support in the catalyst of the present embodiment, industrially produced and sold materials can be used, or the manganese carbonate can be produced by conventionally known methods. In the case of obtaining manganese carbonate by a known method, it is obtainable, for example, through a reaction between a soluble manganese salt solution and ammonium carbonate or an alkali carbonate (for example, sodium carbonate). Moreover, manganese carbonate is also obtainable through a reaction between a divalent manganese ion and a carbonate ion or a bicarbonate ion.

The manganese carbonate support may contain other components besides the manganese carbonate provided that the effects of manganese carbonate are not impaired. Examples of these other components include inorganic oxides which are typically used as supports, such as silica, alumina, and silica-alumina and the like. Moreover, other examples include organic binders that function as assistants during catalyst molding, such as carboxymethyl cellulose and methyl cellulose. Although the amount of these other components can be set as appropriate, provided the expected effects of manganese carbonate are not impaired, in general, the amount is suitably from 5 to 50% by mass on the basis of the mass of the support.

From the viewpoint of moldability, the manganese carbonate support for the catalyst of the present embodiment preferably includes, in addition to the manganese carbonate, both an inorganic oxide and an organic binder, and more preferably includes a silica and an organic binder. The silica incorporated in the manganese carbonate is preferably a silica sol. By using a silica sol, molding of the manganese carbonate support is easier than the case where a powdered silica is included.

The silica content in the catalyst of the present embodiment is typically from 10 to 25% by mass, and preferably from 10 to 20% by mass, in terns of an oxide on the basis of the mass of the catalyst. By regulating the silica content in the catalyst to at least 10% by mass, the catalyst strength improves, and a surface area and pore volume that are suited to the FT reaction can be obtained. Further, by regulating the silica content in the catalyst to not more than 25% by mass, any impairment of the expected effects of the manganese carbonate can be suppressed. The silica incorporated in the manganese carbonate is preferably a silica sol. By using a silica sol, molding of the manganese carbonate support is easier than the case where a powdered silica is included.

Examples of the organic binder used in the catalyst of the present embodiment include carboxymethyl cellulose and methyl cellulose, and methyl cellulose is preferably selected. The organic binder content in the catalyst of the present embodiment is typically not more than 6% by mass, and preferably from 0.5 to 4% by mass, on the basis of the mass of the catalyst. By incorporating an organic binder together with the silica, not only does molding of the catalyst become easier, but satisfactory strength can also be obtained. In particular, by regulating the organic binder content to at least 0.5% by mass, a catalyst having more satisfactory strength can be produced. Further, by regulating the organic binder content to not more than 6% by mass, decreases in the surface area and the pore volume can be suppressed, and any deterioration in the FT reaction activity caused by a reduction in the manganese carbonate content can be suppressed.

The manganese carbonate support used in the catalyst of the present embodiment is a molded support prepared by kneading a mixture formed by incorporating at least the silica and the organic binder (as well as other components where necessary) in manganese carbonate, and subsequently molding the obtained kneading mixture. The kneading method is not particularly limited, and the mixture may be kneaded by hand using a mortar or the like, or may be kneaded using any type of kneading device typically used in the production of catalysts.

Further, the molding method is not particularly limited, and molding can be performed by extrusion molding or tablet molding or the like. Of these methods, extrusion molding is the most preferable from the viewpoints of applying a lower pressure during molding, and being capable of easily preparing a catalyst having a surface area of 100 to 210 $m^2$/g and a pore volume of 0.1 to 0.6 ml/g.

The shape of the molded manganese carbonate support is not particularly limited, and typical cylindrical items, or extruded items having special shapes such as four leaf shapes or ring shapes can be used. Further, the size of the manganese carbonate support is not particularly limited, and the size is selected appropriately so as to match the size of the reactor, and within a range that can inhibit the generation of a differential pressure.

The molded manganese carbonate support is then dried. The drying temperature at this time is preferably not higher than 250°C, and more preferably from 120 to 220°C. By regulating the drying temperature to at least 120°C, evaporation of the water content can be promoted satisfactorily, and the strength of the support increases. Further, provided that the drying temperature is not higher than 250°C, decomposition of the manganese carbonate that represents a component of the support into manganese oxide and carbon dioxide gas can be suppressed, and thermal decomposition of the organic binder can also be suppressed.

Ruthenium is preferably selected as the FT active metal species in the catalyst of the present embodiment. Further, the ruthenium may be used alone, or can also be used in combination with nickel, cobalt, or iron or the like. The FT active metal species that are used besides ruthenium are also preferably used in the form of the corresponding nitrate salt (for example, cobalt nitrate).

The catalyst of the present embodiment is prepared by incorporating an FT active metal species in the molded and dried support (catalyst precursor). One method for incorporating the FT active metal species into the manganese carbonate support is a method of impregnation supporting the FT active metal species on the manganese carbonate support. This impregnation supporting is described hereunder.

It For example, this impregnation supporting can be carried out by impregnating the manganese carbonate support with an aqueous solution of a ruthenium salt, followed by drying and calcination. At this time, in the case where two or more kinds of metals are supported as the FT active metal species, the impregnation supporting may be carried out, for example, by preparing an aqueous solution containing both a ruthenium salt and a cobalt salt, simultaneously impregnating the support with the ruthenium salt and the cobalt salt, and then performing drying and calcination, or by performing separate impregnation of the respective salts in sequence, and then performing drying and calcination. The impregnation supporting method of the FT active metal species onto the manganese carbonate support is not particularly limited.

Examples of the ruthenium salt which is used for the foregoing impregnation supporting include water-soluble ruthenium salts such as ruthenium chloride, ruthenium nitrate, ruthenium acetate, hexaammonia ruthenium chloride and the like. Further, solutions such as a ruthenium nitrate solution which have been prepared with the ruthenium already dissolved therein can also be used. Moreover, an organic solvent such as an alcohol, an ether, or a ketone or the like can be used instead of water as the solvent for the solution of the ruthenium salt used in the impregnation supporting, and in this case, a salt that is soluble in the organic solvent is selected as the salt.

The ruthenium content in the catalyst of the present embodiment is preferably from 0.5 to 5% by mass, more preferably from 0.8 to 4.5% by mass, and especially preferably from 1 to 4% by mass, in terms of a metal on the basis of the mass of the catalyst. The supported amount of ruthenium is related to the number of active sites. By regulating the supported amount of ruthenium to at least 0.5% by mass, the number of active sites is maintained more favorably, and satisfactory catalytic activity can be obtained. Further, by regulating the supported amount of ruthenium to not more than 5% by mass, deterioration in the ruthenium dispersibility and the development of ruthenium species that have no interaction with the support component can be more effectively suppressed.

In the production method for a catalyst according to the present embodiment when incorporating the ruthenium within the manganese carbonate support, the use of ruthenium nitrate as the ruthenium source is especially preferable. For example, impregnation supporting of the ruthenium on the manganese carbonate support can be carried out by impregnating the manganese carbonate support with a ruthenium nitrate solution, and subsequently drying and calcining the support.

Ruthenium chloride is generally widely used as the ruthenium salt used as the ruthenium source when incorporating ruthenium within a support. Ruthenium nitrate and ruthenium chloride each include an anion that is unnecessary in the FT reaction (a nitrate ion and a chloride ion respectively), and in the production of a catalyst for FT synthesis, this anion that is unnecessary for activity is sometimes removed. Because the nitrate ion is more easily removed than the chloride ion, in those cases where the anion is to be removed, using ruthenium nitrate can be expected to yield a reduction in the production costs of the catalyst for FT synthesis compared with the use of ruthenium chloride.

If necessary, a solvent such as water or an organic solvent (an alcohol, ether or ketone) may be used to alter the ruthenium concentration of the ruthenium nitrate solution.

Following impregnation of the manganese carbonate support with the FT active metal species, drying is performed. The drying at this time is performed with the aim of evaporating water and activating the FT active metal species. The temperature during this drying is preferably not higher than 250°C, and more preferably from 70 to 220°C. By regulating the drying temperature to at least 70°C, evaporation of the water can be promoted satisfactorily. On the other hand, provided that the drying temperature is not higher than 250°C, non-uniformity of the active metal component caused by rapid evaporation of the water is suppressed, and thermal decomposition of the organic binder can also be suppressed. Further, in order to achieve activation of the FT active metal species, an appropriate temperature is required. For this reason, the drying temperature is preferably within the foregoing range.

In particular, in the case where ruthenium nitrate is used to support the FT active metal species, the drying temperature is more preferably from 70 to 170°C. By regulating the drying temperature to at least 70°C, evaporation of the solvent such as water or the like can be promoted satisfactorily. If drying is performed at a temperature lower than 70°C, then the evaporation of the water or the like is unsatisfactory, the FT active metal species content per unit of weight of the catalyst decreases, and obtaining a high level of catalytic performance becomes impossible. On the other hand, provided that the drying temperature is not higher than 170°C, non-uniformity of the active metal component caused by rapid evaporation of the water or the like can be suppressed, and decomposition of the manganese carbonate support following supporting of the ruthenium nitrate into manganese oxide and carbon dioxide gas can be suppressed.

Furthermore, by carrying out the drying of the manganese carbonate support following the impregnation with ruthenium at a comparatively low temperature of 170°C or lower, a catalyst for FT synthesis having extremely superior performance can be obtained, which has a higher CO conversion and a lower $CH_4$ selectivity than a catalyst prepared by performing drying at a temperature higher than 170°C.

A detailed mechanism for the enhancement of the activity of the catalyst of the present invention has not yet been elucidated, and extensive and intensive investigations are currently being conducted, but it is thought that by using ruthenium nitrate as the ruthenium source, and performing drying under drying conditions of 70 to 170°C, the distribution state and the metal particle diameter of the FT active metal on the molded support, or the state of bonding between the FT active metal and the molded support is particularly suited to fixed bed Fischer-Tropsch synthesis, thereby enhancing the activity.

The drying treatment time cannot be determined unequivocally as it varies depending on the treatment amount, but is typically from 1 to 10 hours. By regulating the treatment time to at least one hour, evaporation of the water can be reliably achieved, and the problem of sparse activation of the FT active metal species can be suppressed. Further, even when the treatment time exceeds 10 hours, the catalytic activity is not substantially different from that when the treatment time is not more than 10 hours, and therefore taking workability and productivity into consideration, the treatment time is preferably not more than 10 hours. This drying may be carried out in air, in an inert gas atmosphere of nitrogen or helium, or in a reducing gas atmosphere of hydrogen or the like, and is not particularly limited.

Besides the impregnation supporting method described above, the FT active metal species can be incorporated within the manganese carbonate support to prepare the catalyst of the present embodiment by a method in which the manganese carbonate support is immersed in an aqueous solution of the FT active metal species (a solution containing ruthenium nitrate (and where necessary, another FT active metal species)) to adsorb the active metal onto the support (equilibrium adsorption method), by a method in which after the support is immersed in an aqueous solution of the FT active metal species, an alkaline precipitant solution such as ammonia water or the like is added to precipitate the active metal onto the support (deposition method), or by another method.

The surface area of the catalyst of the present embodiment obtained in the manner described above is typically from 100 to 210 $m^2$/g, and preferably from 100 to 190 $m^2$/g. Further, the pore volume of the catalyst of the present embodiment is typically from 0.1 to 0.6 ml/g, and preferably from 0.1 to 0.5 ml/g. By regulating the surface area and the pore volume within these ranges, a high FT activity is realized.

<Production of Hydrocarbons>

The catalyst of the present embodiment can be used, in the same manner as other catalysts for FT synthesis, for the production of hydrocarbons by the FT reaction. In other words, hydrocarbons can be synthesized by bringing a syngas containing hydrogen and carbon monoxide as main components into contact with the catalyst of the present embodiment.

In the case where hydrocarbons are produced using the catalyst of the present embodiment, examples of the type of reactor used for the FT reaction include a fixed bed, a fluidized bed, a suspended bed, and a slurry bed and the like, but the catalyst of the present embodiment is ideal for a fixed bed. A method for producing hydrocarbons using a fixed bed is described hereunder.

When hydrocarbons are produced by a fixed bed using the catalyst of the present embodiment, the catalyst of the present embodiment prepared in the manner described above is packed and fixed inside the reactor. The catalyst of the present embodiment may be packed alone inside the reactor, or the catalyst of the present embodiment may be mixed with a component that is inactive in the FT reaction and then packed inside the reactor.

Prior to supply to the FT reaction, the catalyst of the present embodiment is subjected to a reduction treatment (activation treatment). This reduction treatment activates the catalyst so that the catalyst exhibits the desired catalytic activity in the FT reaction. If this reduction treatment is not performed, then the FT active metal species is not sufficiently reduced, and the desired catalytic activity is not exhibited in the FT reaction.

The treatment temperature in the reduction treatment of the catalyst of the present embodiment is preferably from 140 to 250°C, more preferably from 150 to 240°C, and most preferably from 160 to 230°C. Provided the temperature of the reduction treatment is at least 140°C, the FT active metal species is reduced sufficiently, and satisfactory reaction activity is obtained. Further, provided the temperature of the reduction treatment is not higher than 250°C, thermal decomposition of the support components and the like can be suppressed.

For this reduction treatment, a reducing gas composed mainly of hydrogen is preferably used. The reducing gas that is used may contain other components besides hydrogen, and for example, steam, nitrogen or a rare gas or the like may be included in an amount that does not impair the reduction.

Further, although this reduction treatment is influenced by the foregoing treatment temperature, as well as the hydrogen partial pressure and the treatment time, the hydrogen partial pressure is preferably from 0.1 to 10 MPa, more preferably from 0.5 to 6 MPa, and most preferably from 1 to 5 MPa. Although the reduction treatment time varies depending upon the catalyst amount, and the amount of hydrogen passed through the catalyst and the like, in general, it is preferably from 0.1 to 72 hours, more preferably from 1 to 48 hours, and most preferably from 4 to 48 hours. Provided the treatment time is at least 0.1 hours, it is possible to avoid the problem of insufficient activation of the catalyst. Moreover, provided the treatment time is not more than 72 hours, the enhancement of the catalyst performance is sufficient.

The catalyst of the present embodiment, having been subjected to a reduction treatment in the manner described above, is supplied to the FT reaction, namely a hydrocarbons synthesis reaction. The catalyst is packed and fixed inside a reaction apparatus, and a syngas containing hydrogen and carbon monoxide is brought into contact with the fixed catalyst.

The syngas that is used in the FT reaction may be any gas containing hydrogen and carbon monoxide as main components, and may be mixed with other components which do not inhibit the FT reaction. Moreover, a rate (k) of the FT reaction depends almost linearly upon the hydrogen partial pressure, and therefore it is desirable that a partial pressure ratio of hydrogen to carbon monoxide ($H_2$/CO molar ratio) is 0.6 or more.

Since this reaction is a reaction in which a decrease of volume is involved, it is preferable that the total value of partial pressures of hydrogen and carbon monoxide is as high as possible. Although the upper limit for the partial pressure ratio of hydrogen to carbon monoxide is not particularly limited, a practical range for the partial pressure ratio is preferably from 0.6 to 2.7, more preferably from 0.8 to 2.5, and especially preferably from 1 to 2.3. Provided this partial pressure ratio is at least 0.6, it is possible to prevent a lowering of the yield of the hydrocarbons being formed. Moreover, provided this partial pressure ratio is not more than 2.7, it is possible to suppress a tendency for an increase in the amounts of gaseous components and light components within the formed hydrocarbons.

Examples of other components which may be incorporated in the foregoing syngas and which do not inhibit the FT reaction include carbon dioxide. When hydrocarbons are produced using the catalyst of the present embodiment, a syngas containing carbon dioxide obtained by a reforming reaction of a natural gas or a petroleum product or the like can be used without any problems. Further, other compounds besides carbon dioxide which do not inhibit the FT reaction may also be included, and for example, a syngas containing methane, steam, or partially oxidized nitrogen or the like obtained by a steam reforming reaction or an auto-thermal reforming reaction of a natural gas or a petroleum product or the like may also be used. Moreover, carbon dioxide can also be added proactively to a syngas not containing carbon dioxide. In other words, when producing hydrocarbons using the catalyst according to the present embodiment, if a syngas containing carbon dioxide obtained by reforming a natural gas or a petroleum product by an auto-thermal reforming method or a steam preforming method or the like is supplied to the FT reaction as is, without being subjected to a decarbonation treatment for removing carbon dioxide therein, then facility construction costs and running costs required for the decarbonation treatment can be eliminated, enabling the production cost of hydrocarbons obtained in the FT reaction to be reduced.

When hydrocarbons are produced using the catalyst of the present embodiment, the total pressure (the total value of the partial pressures of all of the components) of the syngas (mixed gas) supplied to the FT reaction is preferably from 0.5 to 10 MPa, more preferably from 0.7 to 7 MPa, and still more preferably from 0.8 to 5 MPa. Provided this total pressure is at least 0.5 MPa, chain growth becomes sufficient, and any lowering of the yields of a gasoline fraction, a kerosene and diesel fuel fraction and a wax fraction can be prevented. In view of equilibrium, higher partial pressures of hydrogen and carbon monoxide are advantageous, but provided the total pressure is not more than 10 MPa, it is possible to appropriately suppress disadvantages from the industrial perspective, such as increases in plant construction costs and the like, and increases in running costs due to the larger compressors and the like required for compression.

In this FT reaction, in general, if the $H_2$/CO molar ratio of the syngas is the same, then the lower the reaction temperature is, the higher the chain growth probability becomes, and the higher the C5+ selectivity (the proportion of products having a carbon number of 5 or more in the FT reaction product) becomes, but CO conversion decreases. In contrast, when the reaction temperature is elevated, the chain growth probability and the C5+ selectivity decrease, but the CO conversion increases. Moreover, when the $H_2$/CO ratio increases, the CO conversion increases, and the chain growth probability and the C5+ selectivity decrease. When the $H_2$/CO ratio decreases, the results are reversed. The size of the effects of these factors on the reaction vary depending on the type of catalyst being used and the like, but in the method using the catalyst of the present embodiment, the reaction temperature is suitably from 200 to 350°C, preferably from 210 to 310°C, and more preferably from 220 to 290°C. The CO conversion is defined according to the following expression.

[CO Conversion]

$$\text{CO conversion} = [(\text{number of moles of CO in the raw material gas per unit of time}) - (\text{number of moles of CO in the outlet gas per unit of time})] / (\text{number of moles of CO in the raw material gas per unit time}) \times 100$$

EXAMPLES

The invention is described below with reference to examples and comparative examples, but it should not be construed that the invention is in any way limited by the following examples.

In the following examples, CO analyses were conducted on a thermal conductivity gas chromatograph (TCD-GC) using active carbon (fi01$Q mesh) as a separation column. A syngas (mixed gas of $H_2$ and CO) to which Ar had been added in an amount of 25% by volume as an internal standard was used as the raw material gas. Qualitative and quantitative analyses were conducted by comparing peak positions and peak areas of CO with those of Ar. Identification of the chemical components of catalysts was conducted by ICP (CQM-10000P, manufactured by Shimadzu Corporation). Further, $CH_4$ selectivity was calculated according to the following expression.

$$\text{CH}_4 \text{ selectivity (\%)} = \text{(number of moles of CH}_4 \text{ in the outlet gas per unit of}$$

$$\text{time) / [(number of moles of CO in the raw material gas per unit of time)} - \text{(number of}$$

$$\text{moles of CO in the outlet gas per unit of time)]} \times 100$$

[Example 1]

As the manganese carbonate, manganese (II) carbonate n-hydrate, manufactured by Wako Pure Chemical Industries, Ltd. was used. The specific surface area measured by the $N_2$ adsorption method was 46.4 m$^2$/g, and the pore volume was 0.15 mL/g. After drying in advance at 150°C for 5 hours, 24 g of the manganese carbonate was weighed, 29.1 g of a silica sol SI-550 (manufactured by JGC C&C Ltd., $SiO_2$ content: 20% by mass) and 0.3 g of a methyl cellulose (manufactured by Wako Pure Chemical Industries, Ltd.) were added, and the mixture was kneaded thoroughly in a mortar. The thus obtained kneading mixture was molded into a cylindrical shape having a diameter of 1.4 mm and a length of 3 to 4 mm using an extrusion molding device, and was then dried in the air at 200°C for 3 hours to obtain a manganese carbonate support (catalyst precursor). Next, 19.4 g of the obtained manganese carbonate support was weighed, this support was then impregnated with an aqueous solution of ruthenium chloride prepared by dissolving 1.5 g of ruthenium chloride (manufactured by Kojima Chemicals Co., Ltd., Ru Assay: 40.79% by mass) in 7.7 g of water, and following standing for one hour, the support was dried in the air at 80°C for 5 hours to obtain a catalyst A.

The results of performing chemical composition analysis of the catalyst A by ICP revealed a silica content of 18.7% by mass in terms of an oxide on the basis of the mass of the catalyst, a methyl cellulose content of 0.9% by mass calculated from the amount of added methyl cellulose on the basis of the mass of the catalyst, and a ruthenium content of 2.6% by mass in terms of a metal on the basis of the mass of the catalyst. The catalyst A was subjected to a vacuum evacuation treatment at 200°C for 3 hours, and when nitrogen adsorption measurements were then performed and the physical properties of the catalyst were measured by the BET method and the DH method, the surface area was 115 m$^2$/g and the pore volume was 0.19 ml/g.

A reactor having an internal diameter of 15.5 mm was charged with 3 g of the catalyst A together with 18 g of a manganese carbonate support as a diluent that does not participate in the reaction, and a reduction was performed for 3 hours by bringing hydrogen into contact with the catalyst A under conditions including a hydrogen partial pressure of 0.9 MPaG, a temperature of 170°C, and a flow rate of 100 (STP) ml/min (STP: standard temperature and pressure). After the reduction, the hydrogen was switched to a syngas having an $H_2$/CO ratio of about 2 (containing about 25% by volume of Ar), and the FT reaction was conducted at a syngas flow rate of 111 ml/min, a temperature of 270°C and a pressure of 0.9 MPaG. The value of W/F (weight/flow) was about 13.5 g·hr/mol. Because the molded catalyst A was used, no generation of a differential pressure was confirmed.
Twenty hours after starting the FT reaction evaluation at 270°C, the CO conversion was about 70%, and the $CH_4$ selectivity was about 9.2%.

[Example 2]

A catalyst B was obtained in the same manner as in Example 1, except for altering the amount of added methyl cellulose to 0.6 g. The results of performing chemical composition analysis of the catalyst B by ICP revealed a silica content of 18.6% by mass in terms of an oxide on the basis of the mass of the catalyst, a methyl cellulose content of 1.8% by mass calculated from the amount of added methyl cellulose on the basis of the mass of the catalyst, and a ruthenium content of 2.5% by mass in terms of a metal on the basis of the mass of the catalyst.

Further, when the physical properties of the catalyst were measured in the same manner as that described for the catalyst A, the surface area of the catalyst B was 109 $m^2$/g and the pore volume was 0.19 ml/g. This catalyst B was supplied to the FT reaction using the same method as that described for Example 1. Twenty hours after starting the FT reaction evaluation at 270°C, the CO conversion was about 68.1%, and the $CH_4$ selectivity was 11.7%.

[Example 3]

A catalyst C was obtained in the same manner as in Example 1, except for altering the amount of added methyl cellulose to 1.8 g. The results of performing chemical composition analysis of the catalyst C by ICP revealed a silica content of 17.5% by mass in terms of an oxide on the basis of the mass of the catalyst, a methyl cellulose content of 5.2% by mass calculated from the amount of added methyl cellulose on the basis of the mass of the catalyst, and a ruthenium content of 2.8% by mass in terms of a metal on the basis of the mass of the catalyst.
Further, when the physical properties of the catalyst were measured in the same manner as that described for the catalyst A, the surface area of the catalyst C was 105 $m^2$/g and the pore volume was 0.18 ml/g. This catalyst C was supplied to the FT reaction using the same method as that described for Example 1. Twenty hours after starting the FT reaction evaluation at 270°C, the CO conversion was about 57.7%, and the $CH_4$ selectivity was 13.1 %.

[Example 4]

A catalyst D was obtained in the same manner as in Example 1, except for altering the amount of added ruthenium chloride to 1.0 g. The results of performing chemical composition analysis of the catalyst D by ICP revealed a silica content of  17.5% by mass in terms of an oxide on the basis of the mass of the catalyst, a methyl cellulose content of 1.9% by mass calculated from the amount of added methyl cellulose on the basis of the mass of the catalyst, and a ruthenium content of 1.7% by mass in terms of a metal on the basis of the mass of the catalyst.
Further, when the physical properties of the catalyst were measured in the same manner as that described for the catalyst A, the surface area of the catalyst D was 103 $m^2$/g and the pore volume was 0.26 ml/g. This catalyst D was supplied to the FT reaction using the same method as that described for Example 1. Twenty hours after starting the FT reaction evaluation at 270°C, the CO conversion was about 65.7%, and the $CH_4$ selectivity was 14.1%.

[Example 5]

A manganese carbonate support was obtained in the same manner as in Example 2. Next, 29.1 g of the molded manganese carbonate support was weighed, this support was then impregnated with 11.2 g of a ruthenium (III) nitrate solution (manufactured by Furuya Metal Co., Ltd., ruthenium content: 8% by mass), and following standing for one hour, the support was dried in the air at 160°C for 8 hours to obtain a catalyst E.
The results of performing chemical composition analysis of the catalyst E by ICP revealed a silica content of 17.2% by mass in terms of an oxide on the basis of the mass of the catalyst, a methyl cellulose content of 1.8% by mass calculated from the amount of added methyl cellulose on the basis of the mass of the catalyst, and a ruthenium content of 3.3% by mass in terms of a metal on the basis of the mass of the catalyst.
Further, when the physical properties of the catalyst were measured in the same manner as that described for the catalyst A, the surface area of the catalyst E was 185  $m^2$/g and the pore volume was 0.42 ml/g. This catalyst E was supplied to the FT reaction using the same method as that described for Example 1. Twenty hours after starting the FT reaction evaluation at 270°C, the CO conversion was about 75.0%, and the $CH_4$ selectivity was 12.7%.

[Example 6]

A manganese carbonate support was obtained in the same manner as in Example 2. Next, 29.4 g of the molded manganese carbonate support was weighed, this support was then impregnated with an impregnation solution prepared by mixing 7.5 g of a ruthenium (III) nitrate solution (manufactured by Furuya Metal Co., Ltd., ruthenium content: 8.05% by mass) and 4.3 g of pure water, and following standing for one hour, the support was dried in the air at 80°C for 8 hours to obtain a catalyst F.
The results of performing chemical composition analysis of the catalyst F by ICP revealed a ruthenium content of 1.8% by mass in terms of a metal on the basis of the mass of the catalyst.
Next, 3 g of the catalyst F was supplied to the FT reaction using the same method as that described for Example 1.
Twenty hours after starting the FT reaction evaluation at 270°C, the CO conversion was about 55.3%, and the $CH_4$ selectivity was 7.2%.

[Example 7]

A catalyst G was obtained in the same manner as in Example 5, except for altering the drying temperature following impregnation to 200°C. The results of performing chemical composition analysis of the catalyst G by ICP revealed a ruthenium content of 3.5% by mass in terms of a metal on the basis of the mass of the catalyst.

This catalyst G was supplied to the FT reaction using the same method as that described for Example 1. Twenty hours after starting the FT reaction evaluation at 270°C, the CO conversion was about 68.4%, and the $CH_4$ selectivity was 13.8%.

[Example 8]

A catalyst H was obtained in the same manner as in Example 6, except for altering the drying temperature following impregnation to 200°C. The results of performing chemical composition analysis of the catalyst H by ICP revealed a ruthenium content of 2.2% by mass in terms of a metal on the basis of the mass of the catalyst.

This catalyst H was supplied to the FT reaction using the same method as that described for Example 1. Twenty hours after starting the FT reaction evaluation at 270°C, the CO conversion was about 46.6%, and the $CH_4$ selectivity was 8.3%.

[Comparative Example 3]

A catalyst I was obtained in the same manner as in Example 6, except for altering the drying temperature following impregnation to 60°C. The results of performing chemical composition analysis of the catalyst I by ICP revealed a ruthenium content of 1.5% by mass in terms of a metal on the basis of the mass of the catalyst.

This catalyst I was supplied to the FT reaction using the same method as that described for Example 1. Twenty hours after starting the FT reaction evaluation at 270°C, the CO conversion was about 41.4%, and the $CH_4$ selectivity was 9.2%.

[Comparative Example 1]

A catalyst a was obtained in the same manner as in Example 1, except for altering the amount added of the methyl cellulose to 3.5 g. The results of performing chemical composition analysis of the catalyst a by ICP revealed a silica content of 17.1% by mass in terms of an oxide on the basis of the mass of the catalyst, a methyl cellulose content of 9.8% by mass calculated from the amount of added methyl cellulose on the basis of the mass of the catalyst, and a ruthenium content of 2.5% by mass in terms of a metal on the basis of the mass of the catalyst.

Further, when the physical properties of the catalyst were measured in the same manner as that described for the catalyst A, the surface area of the catalyst a was 98 $m^2$/g and the pore volume was 0.18 ml/g. This catalyst a was supplied to the FT reaction using the same method as that described for Example 1. Twenty hours after starting the FT reaction evaluation at 270°C, the CO conversion was about 48.2%, and the $CH_4$ selectivity was 14.9%.

[Comparative Example 2]

A catalyst b was obtained in the same manner as in Example 1, except for altering the amount added of the methyl cellulose to 4.4 g. The results of performing chemical composition analysis of the catalyst b by ICP revealed a silica content of 15.1 % by mass in terms of an oxide on the basis of the mass of the catalyst, a methyl cellulose content of 12.0% by mass calculated from the amount of added methyl cellulose on the basis of the mass of the catalyst, and a ruthenium content of 3.0% by mass in terms of a metal on the basis of the mass of the catalyst.

Further, when the physical properties of the catalyst were measured in the same manner as that described for the catalyst A, the surface area of the catalyst b was 82 $m^2$/g and the pore volume was 0.16 ml/g. This catalyst b was supplied to the FT reaction using the same method as that described for Example 1. Twenty hours after starting the FT reaction evaluation at 270°C, the CO conversion was about 42.3%, and the $CH_4$ selectivity was 16%.

[Comparative Example 3]

A catalyst c was obtained in the same manner as in Example 1, except for altering the amount added of the manganese carbonate to 29.4 g, the amount added of the silica sol to 15.6 g, and the amount added of the methyl cellulose to 0.6 g. The results of performing chemical composition analysis of the catalyst c by ICP revealed a silica content of 9.5% by mass in terms of an oxide on the basis of the mass of the catalyst, a methyl cellulose content of 1.7% by mass calculated from the amount of added methyl cellulose on the basis of the mass of the catalyst, and a ruthenium content of 2.3% by mass in terms of a metal on the basis of the mass of the catalyst.

Further, when the physical properties of the catalyst were measured in the same manner as that described for the catalyst A, the surface area of the catalyst c was 87 $m^2$/g and the pore volume was 0.18 ml/g. This catalyst c was supplied to the FT reaction using the same method as that described for Example 1. Twenty hours after starting the FT reaction evaluation at 270°C, the CO conversion was about 51.4%, and the $CH_4$ selectivity was 15.5%.

The experimental results for the foregoing Examples 1 to 9 and Comparative Examples 1 to 3 are shown in Tables 1 to 3.

It is clear from Tables 1 to 3 that the catalysts of the present invention (catalysts A to I) have a low proportion for formation of the gaseous component $CH_4$. Among these catalysts, the catalysts A to G yielded results indicating a particularly high CO conversion and a low proportion for formation of the gaseous component $CH_4$. In contrast, the catalysts a and b which had a methyl cellulose content higher than 6% by mass, despite having a ruthenium content of 0.5 to 5% by mass and a silica content of 10 to 25% by mass in terms of an oxide on the basis of the mass of the catalyst similar to those of the catalysts A to E, exhibited a surface area smaller than 100 $m^2$/g. Further, the catalyst c, in which the silica content was less than 10% by mass in terms of an oxide on the basis of the mass of the catalyst, also exhibited a surface area smaller than 100 $m^2$/g. It is thought that the fact that the surface area of these catalysts was smaller than 100 $m^2$/g was the reason that the catalysts a to c exhibited inferior FT activity compared with the catalysts A to E.

Moreover, comparing the catalysts E to I, a tendency was observed wherein the catalysts obtained by performing the drying following impregnation at a drying temperature within a range from 70 to 170°C (the catalysts E and F) exhibited a higher CO conversion and a lower proportion for formation of the gaseous component $CH_4$ than the catalysts in which the drying temperature exceeded the range from 70 to 170°C.

[Table 1]

|  | Example 1 | Example 2 | Example 3 | Example 4 | Example 5 |
|---|---|---|---|---|---|
|  | Catalyst A | Catalyst B | Catalyst C | Catalyst D | Catalyst E |
| Ru (% by mass) | 2.6 | 2.5 | 2.8 | 1.7 | 3.3 |
| $SiO_2$ (% by mass) | 18.7 | 18.6 | 17.5 | 17.5 | 17.2 |
| Methyl cellulose (% by mass) | 0.9 | 1.8 | 5.2 | 1.9 | 1.8 |
| Surface area ($m^2$/g) | 115 | 109 | 105 | 103 | 185 |
| Pore volume (ml/g) | 0.19 | 0.19 | 0.18 | 0.26 | 0.42 |
| Drying temperature (°C) | 80 | 80 | 80 | 80 | 160 |
| FT reaction results (Twenty hours after starting evaluation at 270°C) | | | | | |
| CO conversion (%) | 70 | 68.1 | 57.7 | 65.7 | 75.0 |
| $CH_4$ conversion (%) | 9.2 | 11.7 | 13.1 | 14.1 | 12.7 |

[Table 2]

|  | Example 6 | Example 7 | Example 8 | Example 9 |
|---|---|---|---|---|
|  | Catalyst F | Catalyst G | Catalyst H | Catalyst I |
| Ru (% by mass) | 1.8 | 3.5 | 2.2 | 1.5 |
| $SiO_2$ (% by mass) | 15.6 | 18.6 | 18.8 | 15.2 |
| Methyl cellulose (% by mass) | 1.8 | 2.0 | 2.1 | 1.8 |
| Surface area ($m^2$/g) | 153.3 | 190.9 | 192.2 | 146.7 |
| Pore volume (ml/g) | 0.37 | 0.51 | 0.50 | 0.35 |
| Drying temperature (°C) | 80 | 200 | 200 | 60 |
| FT reaction results (Twenty hours after starting evaluation at 270°C) | | | | |
| CO conversion (%) | 55.3 | 68.4 | 46.6 | 41.4 |
| $CH_4$ conversion (%) | 7.2 | 13.8 | 8.3 | 9.2 |

[Table 3]

|  | Comparative Example 1 | Comparative Example 2 | Comparative Example 3 |
|---|---|---|---|
|  | Catalyst a | Catalyst b | Catalyst c |
| Ru (% by mass) | 2.5 | 3.0 | 2.3 |
| $SiO_2$ (% by mass) | 17.1 | 15.1 | 9.5 |
| Methyl cellulose (% by mass) | 9.8 | 12.0 | 1.7 |
| Surface area ($m^2$/g) | 98 | 82 | 87 |
| Pore volume (ml/g) | 0.18 | 0.16 | 0.18 |
| Drying temperature (°C) | 80 | 80 | 80 |
| FT reaction results (Twenty hours after starting evaluation at 270°C) | | | |
| CO conversion (%) | 48.2 | 42.3 | 51.4 |
| $CH_4$ conversion (%) | 14.9 | 16 | 15.5 |

**Claims**

1. A catalyst for Fischer-Tropsch synthesis comprising:

   manganese carbonate;
   from 10 to 25% by mass of silica in terms of an oxide on the basis of a mass of the catalyst;
   not more than 6% by mass of an organic binder based on a mass of the catalyst; and
   from 0.5 to 5% by mass of ruthenium in terms of a metal on the basis of a mass of the catalyst,
   wherein the catalyst has a surface area of 100 to 210 $m^2$/g and a pore volume of 0.1 to 0.6 ml/g.

2. The catalyst for Fischer-Tropsch synthesis according to claim 1, wherein the organic binder is a methyl cellulose.

3. A production method for a catalyst for Fischer-Tropsch synthesis, the method comprising:

   preparing a support by kneading a mixture formed by incorporating, in manganese carbonate, an amount of a silica sol sufficient to provide a silica content of 10 to 25% by mass in terms of an oxide on the basis of a mass of the catalyst, and not more than 6% by mass of an organic binder based on a mass of the catalyst, and subsequently molding an obtained kneading mixture,
   subsequently preparing a catalyst precursor by drying the support at not higher than 250°C, and incorporating, in the catalyst precursor, from 0.5 to 5% by mass of ruthenium in terms of a metal on the basis of a mass of the catalyst, and then performing drying at not higher than 250°C.

4. The production method for a catalyst for Fischer-Tropsch synthesis according to claim 3, wherein following incorporating ruthenium in the support using ruthenium nitrate, drying is performed at 70 to 170°C.

5. A method for producing hydrocarbons comprising synthesizing hydrocarbons from a gas containing hydrogen and carbon monoxide e as main components, using the catalyst for Fischer-Tropsch synthesis according to claim 1 or 2.

6. A method for producing hydrocarbons comprising synthesizing hydrocarbons from a gas containing hydrogen and carbon monoxide as main components, using a catalyst for Fischer-Tropsch synthesis produced using the production method for a catalyst for Fischer-Tropsch synthesis according to claim 3 or 4.

**INTERNATIONAL SEARCH REPORT**

International application No.

PCT/JP2012/051403

A. CLASSIFICATION OF SUBJECT MATTER
*B01J31/32*(2006.01)i, *B01J27/232*(2006.01)i, *B01J35/10*(2006.01)i, *B01J37/04*
(2006.01)i, *C10G2/00*(2006.01)i

According to International Patent Classification (IPC) or to both national classification and IPC

B. FIELDS SEARCHED

Minimum documentation searched (classification system followed by classification symbols)
B01J31/32, B01J27/232, B01J35/10, B01J37/04, C10G2/00

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)
JSTPlus(JDreamII), JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2010-221108 A (Cosmo Oil Co., Ltd.), 07 October 2010 (07.10.2010), claims; paragraphs [0030] to [0034]; example 3 & US 2011/0112206 A1    & EP 2301663 A1 & WO 2009/157260 A1    & AU 2009263607 A & CN 102076413 A | 1-6 |
| A | JP 2010-005496 A (Cosmo Oil Co., Ltd.), 14 January 2010 (14.01.2010), entire text & US 2011/0112206 A1    & EP 2301663 A1 & WO 2009/157260 A1    & AU 2009263607 A & CN 102076413 A | 1-6 |

| ☒ | Further documents are listed in the continuation of Box C. | ☐ | See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 12 April, 2012 (12.04.12) | Date of mailing of the international search report 24 April, 2012 (24.04.12) |
|---|---|
| Name and mailing address of the ISA/ Japanese Patent Office | Authorized officer |
| Facsimile No. | Telephone No. |

Form PCT/ISA/210 (second sheet) (July 2009)

### INTERNATIONAL SEARCH REPORT

| | International application No. |
| --- | --- |
| | PCT/JP2012/051403 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Yasutomo MIURA et al., "Tansan Manganese o Tantai to suru Ru-kei FT Shokubai", Dai 40 Kai Sekiyu·Sekiyu Kagaku Toronkai Koen Yoshi, 25 November 2010 (25.11.2010), vol.40th, page 199 | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011011896 A
- JP 2011011897 A
- US 5733839 A
- US 5545674 A
- EP 0167215 A
- JP H370691 B
- JP H370692 B
- WO 2009157260 A
- JP 2010005496 A

**Non-patent literature cited in the description**

- C1 Chemistry. Catalysis Society of Japan, Kodansha Ltd, 01 April 1984, 25